Europäisches Patentamt

European Patent Office

Office européen des brevets

(11) Publication number: **0 192 352**
**A2**

# (12) EUROPEAN PATENT APPLICATION

(21) Application number: **86300526.0**

(22) Date of filing: **27.01.86**

(51) Int. Cl.⁴: **G 01 F 25/00**
**G 01 F 3/22**

(30) Priority: **20.02.85 GB 8504354**

(43) Date of publication of application:
**27.08.86 Bulletin 86/35**

(84) Designated Contracting States:
**AT BE DE FR GB IT NL SE**

(71) Applicant: **SMITH METERS LIMITED**
**170, Rowan Road**
**Streatham Vale London, SW16 5JE(GB)**

(72) Inventor: **Swain, Rene Lawrence**
**46, Thurleston Avenue**
**Morden Surrey, SM4 8BW(GB)**

(72) Inventor: **Connolly, Stephen**
**165, Cannon Hill Lane**
**Raynes Park London, SW20 9BZ(GB)**

(72) Inventor: **Bishop, John Gordon**
**13, Kenmore Road**
**Kenley Surrey(GB)**

(72) Inventor: **Jeffers, Richard**
**17, Manor Road**
**West Wickham Kent, BR4 9PS(GB)**

(74) Representative: **Betteridge, Eileen Margaret**
**170, Rowan Road**
**Streatham Vale London, SW16 5JE(GB)**

(54) **Test equipment.**

(57) A gas meter (11) has a rotational indicator viewed by a photo-switch (30). Air is passed by a highly accurate bell prover along gasways (27) and through the meter. A test, automatically conducted by a controller, comprises comparing the volume measured by the bell prover with the nominal value of a complete rotation of the meter's indicator as signalled by the photo-switch. The controller has a print-out section which shows whether the meter is within a predetermined accuracy range, and if not, what correction is required.

FIG.1

0192352

## TEST EQUIPMENT

This invention relates to test equipment for use in checking the accuracy of volumetric flow meters by comparing the performance of the meter with reference means.

The invention provides test equipment for use in checking the accuracy of a volumetric flow meter having a rotational volume-indicating indicator, the equipment comprising means for driving a gas through a meter under test at a known flow rate, photo-electric switch means located to sense the passage of the rotational indicator at one point in its path, means for measuring the volume of gas driven through the meter between a finite number of revolutions of the indicator and a controller connected to control and monitor a test and to determine whether or not the meter under test performs within a predetermined accuracy range.

The test equipment may include means for connecting gas ways from the means for driving the gas through the meter to bosses on the meter, the connecting means being located relative to the photo-electric switch means so that in attaching a meter to the connecting means the meter is also located correctly relative to the photo-electric switch means.

The connecting means may comprise a conical opening leading to a seal, and means for pressing the opening down over a boss on a meter so that the boss engages the seal, the conical opening operating on the boss to urge the meter to a predetermined location central to the seal, in which location it is correctly positioned relative to the photo-electric switch means.

The means for driving a gas through a meter at a known rate may comprise a bell prover, gas ways leading to and from a meter under test and a fixed-flow valve connected on an outlet gasway. The means for measuring the volume of gas driven through the meter may comprise a rotary angle encoder detecting the angle position of a rotational member which rotates when a holder moves up or down.

The invention also extends to a method of testing the accuracy of a volumetric flow meter using test equipment as set out above.

By means of the invention it is possible to check the accuracy of a volumetric flow meter having a rotational indicator without requiring any expensive alterations to the design of the meter itself. The only requirement is that the indicator should affect a photo-electric cell,

PM472

0192352

and since an indicator is necessarily made to be read visually it is generally the case that it will trigger a photo-electric cell. Furthermore, the meter is quickly and easily located relative to the photo-electric cell by the operation of the gasway connections means on its bosses. Again, no special design alterations are needed on the meter to enable it to be located in this way. The photo-electric cell detects one or more complete rotations of the indicator from a starting position which is determined by the indicator triggering the cell. Thus the starting position is determined by a specific relationship of the indicator and the cell and the finishing position by the same relationship. There is no need to provide exactly the same positional relationship for all the meters, since a complete rotation is achieved from whatever the starting point is.

A specific embodiment of the invention is shown in the accompanying drawings, in which:-

Figure 1  is a diagrammatic representation of a part of a test console,           and

Figure 2  is a diagrammatic representation of a meter clamping device forming part of the console.

The test console is intended for the testing and/or calibration of gas flow meters of the kind in which one or more flexible diaphragms is moved back-and-forth by the flowing gas, the movements of the diaphragms providing a measure of the volume of gas flowing through. Such a meter is shown at (11) mounted in the console ready for a test of its measuring accuracy. The meter has a measuring mechanism (not shown) including crank arms, a gear box with gear wheels and a mechanical counting index which can be viewed through a window (12).

The test console operates by using a highly accurate measuring device (not shown) to measure a test volume of gas (in this case air) which is passed through the gas meter. The quantity indicated by the gas meter index is compared with the quantity measured by the test measuring device in a micro-processor based controller. This determines whether the error is within predetermined allowable parameters, and indicates whether the meter under test passes or fails. It may also indicate what alteration to the gears of the meter's gear box is required to bring the meter operation into the acceptable range.

PM472

0192352

The accurate testing device is a bell prover having an oil-filled base in which slides a hollow cylindrical bell or holder. Stationary structure mounts a rotatable pulley wheel with which engages a counterbalanced chain on which the holder is supported. Proximity detectors at upper and lower positions determine the limits of the vertical movement of the holder. Vertical movement of the holder is accompanied by rotation of the pulley. A gear driven encoder associated with the pulley produces an electronic signal related to the angular rotation of the pulley and thus a measure of the vertical movement of the holder.

In a test, an air blower directs air along an airway containing a ball valve into the holder, driving the holder to its upper position. Thus the holder is filled with air ready for a test cycle. Further valves are then operated allowing the holder to drop down, thus expelling air along an airway through the gas meter (11) and out of either one of two outlet paths. Thus a quantity of air held in the holder is passed through the meter.

A photo-switch device (30) is located adjacent the index window (12). This incorporates a photo-electric cell and a light source directing a beam of light at the index. The meter index comprises a circular light-reflecting dial, e.g. painted white, and has a rotating indicator arm moving around the dial to be read against indices. The photo-cell is arranged to receive light reflected back from the dial and to react when the rotating arm (which may be non-reflective, e.g. coloured black) cuts the path of the light beam and momentarily shuts off the light reflection.

To start a test, air is passed through the meter to drive the meter index arm around. When the index arm cuts the light beam a signal is sent to the controller which then memorises the reading of the encoder reading out the angular position of the pulley. The holder descends, driving air through the meter and continuing to rotate the arm. When the arm cuts the light beam again after a full rotation the controller memorises the new reading of the encoder. The controller now makes a comparison between the nominal volume related to one full rotation of the arm and the actual volume as calculated from the two encoder readings.

The controller also makes corrections for temperature and pressure variations in the test air, obtaining a temperature reading from temperature probes, and a pressure reading from pressure transducers connected by pressure tappings. The temperature probes and pressure transducers have a high accuracy, stability and speed of response.

PM472

0192352

Before each test the controller checks the operation of the temperature probes and pressure transducers.

The controller determines whether the difference between the nominal volume and the measured volume is within an acceptable range of values and displays the result on a screen. Other information relating to the test, e.g. the temperature and pressure, may also be displayed. The controller has a print-out section on which this information is also printed.

Each outlet path from the meter provides a different controlled rate of flow. Two tests are carried out on the meter (11) in succession, one with one rate of flow, and one with the other rate of flow. Both tests need to be passed for the meter to be accepted. The controller opens and closes valves by means of high pressure air controlled by solenoid actuators, in order to carry out the tests automatically.

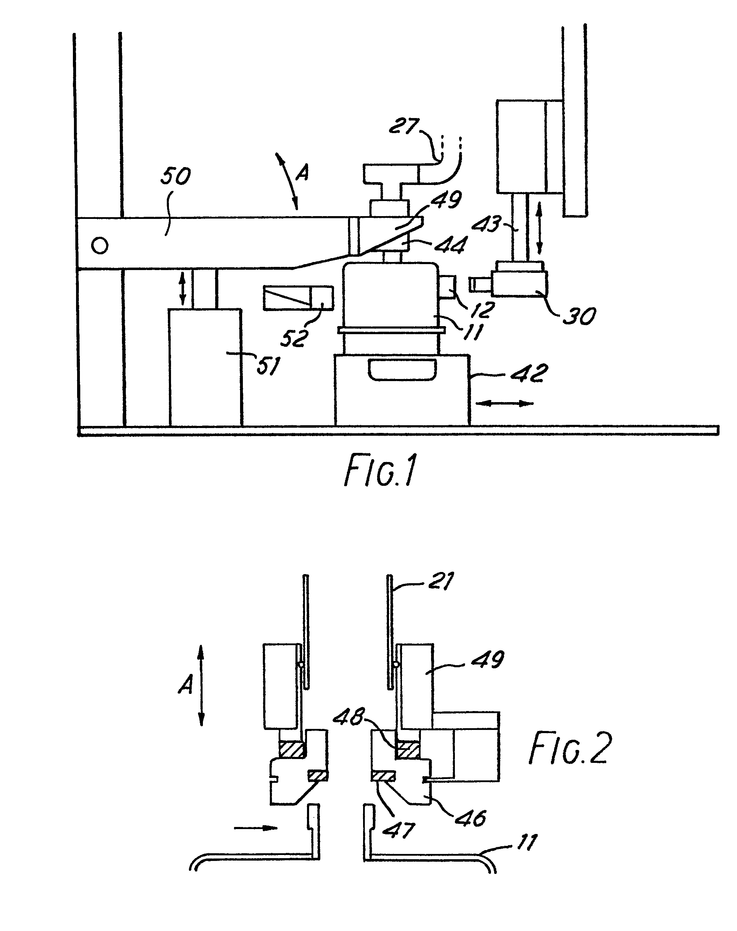

The test console comprises the end part of a gas meter production line in which, as shown in Figure 1, the meter (11) is transported in a shallow carrier box (42). In order to allow the meters and box to enter and leave the console, the photo-switch device (30) is mounted at the lower end of a vertically movable pneumatic ram (43). The controller sends a signal to the ram (43) to retract the photo-switch device (30) when a tested meter is removed and a new meter put in its place.

Similarly, in order for test air to pass through the meter, airtight connections (44) have to be made to inlet and outlet bosses of the meter. As shown in Figure 2, each airtight connection comprises an end piece (46) having a conical opening leading to a rubber sealing ring (47). The end piece itself is mounted on the end of the airway (27) by another rubber ring (48). As seen best in Figure 1, the end piece (46) is held by a clamp head (49) carried at the end of a pivoted lever (50). Another pneumatic ram (51) is arranged to move the lever (50) up and down, thus lifting the end piece (46) up off the boss of the meter or down into contact therewith, as shown by arrows A. The ring (48) compensates for slight variations in the height of the bosses of the meters so that the end piece can take up a slightly tilted position relative to the clamp head and seal on bosses which require the lever (50) to take up a non-horizontal position.

When a new meter and box enter the console, the box is located by guides (not shown) which place the meter adjacent the end pieces (46) and the photo-switch (30). Proximity detector (52) signals the controller that a meter is present. Some adjustment to the position of the meter is made by the end piece (46) as the lever (50) is lowered. The conical openings engage over the bosses of the meter and push the meter to a position in which its bosses are centrally located with respect to the end pieces. This also locates the meter correctly with respect to the photo-switch. The end pieces are urged down onto the bosses with a force sufficient to obtain a good seal on the rubber rings (47), for instance 80 lbs force. When the test is completed, the lever (50) is lifted, freeing the meter.

Preferably, the console provides two testing stations side by side, so that two meters can be tested together, both meters being carried in the same box.

The controller has the capacity to be re-programmed to alter the test operations or sequence. It may also be programmed to conduct a leak test on each meter either before or after the volumetric flow test. In this test the outlet paths are both closed, the air blower supplies air to a predetermined pressure to a meter under test, and the pressure in the meter is monitored over a predetermined time. The result of the leak test is then added to the displayed and printed-out material.

PM472

0192352

CLAIMS:

1. Test equipment for use in checking the accuracy of volumetric flow meters having rotational volume-indicating indicators, the equipment being of the kind in which the measurement of a meter is compared with that of a highly accurate reference which drives gas through the meter in a test station at a known flow rate, characterized by photo-electric switch means (30) located to sense the passage of the meter's rotational indicator at one point in its path and a controller connected to initiate a test in which said rotational indicator rotates a finite number of times as determined by said photo-electric switch means (30), the controller comparing the nominal flow volume represented by the rotation of the indicator to the volume measured by the reference, and determining therefrom whether or not the meter under test (11) performs within a predetermined accuracy range.

2. Test equipment as claimed in claim 1, further characterized by connecting means (44) for connecting gasways (27) from the reference to bosses on the meter (11) which are located relative to the photo-electric switch means (30) so that in attaching a meter to the connecting means (44) the meter indicator is also located correctly relative to the photo-electric switch means (30).

3. Test equipment as claimed in claim 2, further characterized by each said connecting means (44) comprising a conical opening leading to a seal (47), there being means (50, 51) for pressing the opening down over the boss of the meter so that the boss engages the seal (47), the conical opening operating on the boss so as to urge the meter into its correct position in the test station so that it is correctly positioned relative to the photo-electric switch means (30).

4. Test equipment as claimed in any of claims 1 to 3, in which said reference means is a bell prover characterized by a rotary angle encoder reading the movement of the bell and providing an electric signal representing the position of the bell to the controller.

5. Test equipment as claimed in any of claims 1 to 4, further characterized by a plurality of valves actuated automatically by the controller to initiate and progress the steps of a test.

PM472

6.    Test equipment as claimed in any of claims 1 to 5, further characterized by being included as the last stage of a gas meter production line through which each meter is carried in a carrier (42), the controller automatically initiating a test when it senses the presence of a gas meter at the test station.

7.    Test equipment as claimed in any of claims 1 to 6, further characterized by said controller comprising display and/or print-out means on which the factors relating to each test are shown.

PM472

FIG.1

FIG.2